# EUROPEAN PATENT APPLICATION

(11) **EP 4 579 553 A1**
(43) Date of publication of application: **02.07.2025**
(21) Application number: 23220291.1
(22) Date of filing: 27.12.2023
(51) Int. Cl.: G06Q 20/06, G06Q 20/22, G06Q 20/36

(54) **SECURE TOKEN TRANSACTION UNIT AND METHOD IN A SECURE TOKEN TRANSACTION UNIT**

(71) Applicant: Giesecke+Devrient advance52 GmbH, 81677 München (DE)
(72) Inventor: HUPEL, Lars, 81677 München (DE); SEIDEMANN, Wolfram, 81827 München (DE)
(74) Representative: Giesecke+Devrient IP

(57) **Abstract**

A secure token transaction unit (STU) comprising: an offline token receiving unit (101) configured for receiving at least one offline token of an electronic token transaction system (TS) from at least one other secure token transaction unit (ASTU) of the electronic token transaction system (TS); an offline token storage unit (102) configured for storing the received at least one offline token of the electronic token transaction system (TS); wherein in a collector mode of the secure token transaction unit (STU), the received offline token is stored such that its spendability is restricted.

## Description

The invention relates to a secure token transaction unit. The invention also relates to a method in a secure token transaction unit.

In electronic transaction systems there are electronic transactions provided. Electronic transactions, such as electronic payment transactions, can be made on an account-based model, e.g. online, or a token-based model, e.g. offline. A transaction in the account-based, i.e. online, model triggers nodes to decrement the balance of the payer's account and increment the balance of the payee's account. Alternatively, in a token-based, i.e. offline, model, tokens are directly (or indirectly) transferred between payer and payee, e.g. using electronic wallets etc. Both models are applicable within this disclosure.

Tokens - also referred to as digital assets, electronic coins, coin data sets - may represent any digital asset, in particular a digital currency, preferably a central bank digital currency, short CBDC. These tokens are minted and melted by an issuing unit or dismissing unit of the token transaction system, such as an issuing authority, or a central bank unit or a commercial bank unit. The token comprises a value (v) and a token reference (r) but is not limited thereto. Token may be an online token or an offline token depending on the used transaction model. For instance, a token-based model, e.g. offline model, uses offline tokens and an account-based model, e.g. online model, uses online balances.

There are different technical approaches for exchanging electronic tokens such as a digital asset e.g., digital currency such as CBDC, issued by a central bank within the electronic tokens transaction system.

Electronic token transactions and/or storage of tokens and any associated transaction data and/or storage data in an electronic token transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

In conventional electronic token transaction systems, offline transactions are only possible for user having an ID, such that e.g. merchants and companies are excluded from using offline transactions or merchants can receive offline transactions but cannot pay out the offline transaction. In the business environment, i.e. the business/transactions between a payer (e.g. user) and a payee (e.g. merchant or, companies other user being not authorized to have an ID), the use of offline transactions is helpful and increases the flow of monetary values in the whole electronic token transaction system. Therefore, there is a need for providing a possibility that everyone, i.e. both user and e.g. merchants, can use offline token transaction. Additionally, in conventional electronic token transaction systems, the token issuer, e.g. the central bank, imposes token limits on offline spending due to a risk management. Therefore, it is a typical solution that incoming offline transactions/payments exceeding the token limit are merely blocked. Therefore, there is also a need for providing a possibility that no blocking of offline transactions occurs anymore.

The above-identified objectives are solved with the features of the independent patent claims. Further advantageous embodiments are described in the dependent patent claims.

In an aspect of the present invention there is provided a secure token transaction unit. The secure token transaction unit comprises an offline token receiving unit configured for receiving at least one offline token of an electronic token transaction system from at least one other secure token transaction unit of the electronic token transaction system, and an offline token storage unit configured for storing the received at least one offline token of the electronic token transaction system, wherein, in a collector mode of the secure token transaction unit, the received offline token is stored such that its spendability is restricted.

The secure token transaction unit may represent any unit being configured for storing online and/or offline token to be directly exchanged between users/participants of an electronic token transaction system. The secure electronic token transaction unit may be called a wallet, a payment application unit or a secure element but is not limited thereto. The secure electronic token transaction unit may comprise an offline token receiving unit and an offline token storage unit but is not limited thereto. The secure electronic token transaction unit may further comprise an offline token counter, a marking and/or encryption unit, an online token receiving unit, an online token storage unit, an online token counter and/or a limit management unit but is not limited thereto. The offline token receiving unit, the offline token storage unit, the offline token counter, the marking and/or encryption unit, the online token receiving unit, the online token storage unit, the online token counter and/or the limit management unit may be directly or indirectly communicatively couped to each other.

The secure token transaction unit may comprise a collector mode in which only offline token are stored - respectively collected - in the offline token storage unit and a normal mode in which only online token are stored in the online token storage unit. The secure token transaction unit can switch between both modes based on the availability of the electronic token transaction system. Alternatively, secure token transaction unit can switch between both modes based an initial configuration, a user configuration (e.g. merchant or consumer), a transaction volume (e.g. how much money have received so far), and/or available features (e.g. am I allowed to spend money that I have received) but is not limited thereto. For instance, when an account-based token transaction system is available, the secure token transaction unit will stay respectively will be in the normal mode. Alternatively, when a token-based, e.g. offline, token transaction system is available, the secure token transaction unit switches, stays respectively is in the collector mode. Based on the availability of the online or offline token transaction system, the secure token transaction unit can switch between modes as often as it like.

The secure token transaction unit may be a merchant secure token transaction unit. The merchant secure token transaction unit may be permanently operating in a collector mode. In such a case, the secure token transaction unit may be a secure collector token transaction unit which may be able to receive offline token but which cannot send offline token as needed or arbitrarily. The collector token transaction unit may only redeem offline token at its own bank account. In variants of the invention, the collector STU may not comprise an online account for online token transactions. A collector STU may be a merchant STU or a loT device wallet or a service provider wallet.

The secure token transaction unit may be an (end) user secure token transaction unit. The user secure token transaction unit may be operable in the collector mode and in a normal mode. In the normal mode, the STU may manage tokens within a normal mode offline token limit. In the collector mode, the STU may manage tokens within a collector mode offline token limit.

The offline token receiving unit may represent any unit being configured for receiving at least one offline token from at least one other secure token transaction unit of the electronic token transaction system. The offline token receiving unit may be directly or indirectly communicatively coupled to the at least one other secure token transaction unit but is not limited thereto.

The other secure token transaction unit may represent any unit, in particular token transaction unit, being identical or at least having the same purpose or same structure like the secure token transaction unit. The secure token transaction unit and the other secure token transaction unit may have the same or a different user respectively owner but is not limited thereto. The other secure token transaction unit may provide an offline token and/or an online token to the secure token transaction unit but is not limited thereto.

The offline token storage unit may represent any unit of the secure electronic token transaction unit, being configured for storing, i.e. temporarily or permanently storing, respectively collecting one or more offline token. For instance, the offline token storage unit may include a data storage or a memory. The data storage or the memory may be included in the offline token storage unit or may be arranged external to the offline token storage unit, wherein the data storage or memory is directly communicatively coupled to the offline token storage unit. Additionally, when the data storage or the memory may be included in the offline token storage unit or may be arranged external to the offline token storage unit, the offline token storage unit further comprises a processing unit for transmitting offline token to be stored to the data storage or the memory and for receiving stored offline token from the data storage or the memory.

The offline token storage unit may comprise an offline token limit, in particular an offline token monetary value limit, stored as a value within a storage space. In this context, the storage space may comprise a data field in which the token limit is represented as a data value. The offline token limit may be a normal mode offline token limit or a collector mode offline token limit.

A collector mode offline token limit may be at least 150% of a normal mode offline token limit, preferably at least 300% of the normal mode offline token limit, more preferably at least 1000% of the normal mode offline token limit but is not limited thereto.

The collector mode may represent any offline mode of the secure token transaction unit. In this offline mode, the secure token transaction unit solely stores respectively collects the incoming respectively received offline tokens provided by another secure token transaction unit. The collector mode may be the counterpart of the normal mode.

The term "spendability" may represent any ability of a token, i.e. online token or offline token, to be spent in a further respectively another token transaction. The spendability of the token may be restricted, i.e. activated or deactivated. In particular, the spendability of an offline token may be activated or deactivated. In other words, the spendability of a token having normally an activated spendability is deactivated. Based on the deactivation of the spendability of the offline token, the offline token can only be redeemed or paid to an online account, e.g. bank account, of the user. The online account or bank account may be defined respectively set or specified before or during the collector mode e.g. during a personalization time or preparation time. Therefore, the secure token transaction unit may be permanently tied to a bank account or online account of a user. Alternatively, the offline token can be send/transmitted/transferred to another secure token transaction unit wherein the token retains the deactivated spendability. In case of an online token, the spendability is activated. Based on the activation of the spendability of the online token, the online token can be spent in at least one other/further token transaction. The spendability may provide that a token transaction from a hardware to a hardware is forbidden but a token transaction from a hardware to an online wallet is allowed.

The user may represent any financial service provider like banks or IoT wallets that take part in respectively are members of the electronic token transaction system. Each user may be different to another user but is not limited thereto.

The offline token limit may represent any limit respectively threshold of the maximum number of offline token or the maximum number of the monetary value of the offline token storable/collectable in the offline token storage unit. The offline token limit may be a number but is not limited thereto. The offline token limit may be a part of a shared token limit, in particular monetary value of a shared token limit. The shared token limit may be a token limit consisting of the offline token limit and the online token limit. The shared token limit may be stored on one or more of the online token storage unit and/or in one or more of the offline token storage unit but is not limited thereto. The offline token limit may be a fix limit or may be a variable limit. The online token limit and the offline token limit may be identical or different.

The offline token counter may represent any counting unit configured for counting the number of incoming respectively received offline token and/or the number of the monetary value of the incoming respectively received offline token but is not limited thereto. Additionally or alternatively, the offline token counter is configured for identifying if the at least one offline token, in particular the monetary value of the at least one offline token, is above, below or equals the offline token limit, in particular the offline token monetary value limit. The offline token counter may provide a number or a monetary value, like euro or US dollar, as a result but is not limited thereto. The offline token counter counts the offline token since the last reconciliation, i.e. the swap from the normal mode to the collector mode. In case the offline token counter identifies that the at least one token is above the offline token limit, the offline token counter is capable of respectively configured for initiating a redeeming or paying of the offline token in and/or above the offline token limit. Alternatively or additionally, the redeeming or paying of the offline token may be executed in fixed time intervals like once every day but is not limited thereto. Alternatively or additionally, the offline token storage unit may hold the received offline token until the next online reconciliation happens i.e. until the collector mode changes switches to the normal mode. In the normal mode the offline token may be immediately transferred/redeemed or paid to a designated bank account or online account of the user such that the offline token storage unit is discharged when the collector mode switches into the normal mode. Additionally, the offline token counter may be set to zero but is not limited thereto. The offline token counter may be never decreased, i.e. the counted number cannot be decreased. Alternatively, the offline token counter may be increased by incoming offline token or decreased by outgoing offline token.

The marking and/or encryption unit may any unit being configured for marking the received at least one offline token as to have a deactivated/restricted spendability. Additionally or alternatively, the marking and/or encryption unit may be configured for encrypting the received at least one offline token as to have a deactivated/restricted spendability. The marking may include the labeling of the offline token with any deactivation information like "collected token" or "deactivated/restricted token" but is not limited thereto. The encrypting may include the providing of the offline token with an encryption element like a key, e.g. public key, but is not limited. The encryption key may be provided by a trusted entity like the bank operating the bank account that is linked to the offline wallet. Additionally or alternatively the encrypting can be provided by changing the form of the offline token in order to hinder its usability and/or readability. The encrypting of the offline token can be provided on the whole token or on at least parts, e.g. secret and individual data elements of the token, of the whole token. The bank account of the user or the online account of the user may be only able to remove the marking of the offline token and/or may be able to decrypt the offline token, i.e. having a respective decrypting element e.g. decryption key, provides back the usability and/or readability of the offline token.

The online token receiving unit may represent any unit being configured for receiving at least one online token from at least one other secure token transaction unit of the electronic token transaction system. The online token receiving unit may be directly or indirectly communicatively coupled to the at least one other secure token transaction unit but is not limited thereto.

The online token storage unit may represent any unit of the secure electronic token transaction unit, being configured for storing, i.e. temporarily or permanently storing, respectively collecting one or more online token. For instance, the online token storage unit may include a data storage or a memory. The data storage or the memory may be included in the online token storage unit or may be arranged external to the online token storage unit, wherein the data storage or memory is directly communicatively coupled to the online token storage unit. Additionally, when the data storage or the memory may be included in the online token storage unit or may be arranged external to the online token storage unit, the online token storage unit further comprises a processing unit for transmitting online token to be stored to the data storage or the memory and for receiving stored online token from the data storage or the memory. The online token storage unit may comprise an online token limit, in particular an online token monetary value limit, in a storage space.

The normal mode may represent any online mode of the secure token transaction unit. In this online mode, the secure token transaction unit solely stores respectively collects the incoming respectively received online token provided by another secure token transaction unit. The normal mode may be the counterpart of the collector mode.

The online limit may represent any limit respectively threshold of the maximum number of online token or the maximum number of the monetary value of the online token storable/collectable in the online token storage unit. The online token limit may be a part of a shared token limit, in particular monetary value of a shared token limit. The shared token limit may consist of the offline token limit and the online token limit. The online token limit may be a fix limit or may be a variable limit. The online token limit and the offline token limit may be identical or different.

The online token counter may represent any counting unit configured for counting the number of incoming respectively received online token and/or the number of the monetary value of the incoming respectively received online token but is not limited thereto. Additionally or alternatively, the online token counter is configured for identifying if the at least one online token, in particular the monetary value of the at least one online token, is above, below or equals the online token limit, in particular the online token monetary value limit. The online token counter may provide a number or a monetary value, like euro or US dollar, as a result but is not limited thereto.

The limit management unit may represent any unit being configured for setting and/or updating the online token limit and/or the offline token limit of the offline token storage unit and/or the online token storage unit. Specifically, the limit management unit may be configured for setting and/or updating the monetary value of the offline token limit and/or the monetary value of the online token limit. In this context, the term "setting" may represent that the online token limit or the offline token limit is set/adjusted to a fix or variable/changeable token limit by the limit management unit. This may be used when a token limit is set for the first time in the offline token storage unit and/or the online token storage unit (zero to limit A case). The term "updating" may represent that an already existing online or offline token limit, in particular monetary value of the online or offline token limit, is decreased or increased by the limit management unit. The decreasing or increasing may be based on inputs of the user and/or by inputs of the provider of the secure token transaction unit or a central system instance but is not limited thereto (A to B case). Inputs may be token limit updates respectively token limit update data but is not limited thereto. Alternatively or additionally, the limit management unit may be able provide, set or update the relation between the online token limit and the offline token limit or is able to set or update the distribution of the sheared token limit into the offline token limit and the online token limit but is not limited thereto. Specifically, the limit management unit may be able to provide/generate an offline token limit update and/or online token limit update and for updating the online token limit and/or the offline token limit

By including a collector mode in the secure token transaction unit, and by deactivating the spendability of a received offline token, there can be provided a possibility that everyone, i.e. both user and e.g. merchants, can use offline token transactions. Further, there is provided a possibility that no blocking of offline transactions occurs anymore.

In a preferred embodiment of the secure token transaction unit, the electronic token transaction system is an offline token transaction system of an electronic token transaction system comprising an online digital currency system and the offline token transaction system.

In a preferred embodiment of the secure token transaction unit, the secure token transaction unit is a merchant secure token transaction unit.

By specifying that the secure token transaction unit is a merchant secure token transaction unit merchants can use offline token transactions.

In a preferred embodiment of the secure token transaction unit, the secure token transaction unit is a user secure token transaction unit.

In a preferred embodiment of the secure token transaction unit, the offline token storage unit comprises an offline token limit, in particular an offline token monetary value limit, and wherein the secure token transaction unit further comprises an offline token counter, in particular an offline token monetary value counter, configured for identifying if the at least one offline token, in particular the monetary value of the at least one offline token, is above, below or equals the offline token limit, in particular the offline token monetary value limit.

In a preferred embodiment of the secure token transaction unit, a collector mode offline token limit is at least 150% of a normal mode offline token limit, preferably at least 300% of the normal mode offline token limit, more preferably at least 1000% of the normal mode offline token limit. So, in the collector mode, the secure transaction unit can manage a higher amount of monetary value compared to its normal mode.

In a preferred embodiment of the secure token transaction unit, the secure token transaction unit further comprises a marking and/or encryption unit configured for marking the received at least one offline token as to have a restricted spendability and/or for encrypting the received at least one offline token as to have a restricted spendability.

By marking and/or encrypting the offline token as to have a restricted spendability, the restriction of the spendability can be ensured.

In a preferred embodiment of the secure token transaction unit, the secure token transaction unit further comprises an online token receiving unit configured for receiving at least one online token of an electronic token transaction system of at least one other secure token transaction unit of the electronic token transaction system, and an online token storage unit configured for storing the received at least one online token of the electronic token transaction system, wherein in a normal mode of the secure token transaction unit, the received at least one online token is spendable in at least one further token transaction.

In a preferred embodiment of the secure token transaction unit, the online token storage unit comprises an online limit, in particular an online token monetary value limit, and the secure token transaction unit further comprises an online token counter, in particular an online token monetary value counter, configured for identifying if the at least one online token, in particular the monetary value of the at least one online token, is above, below or equals the online token limit.

In a preferred embodiment of the secure token transaction unit, the secure token transaction unit further comprises a limit management unit configured for setting and/or updating the online token limit and/or offline token limit, in particular the mandatory value of the online token limit and/or the mandatory value of the offline token limit.

In a preferred embodiment of the secure token transaction unit, the offline token limit, in particular the offline token monetary value limit, of the offline token storage unit and the online token limit, in particular the online token monetary value limit, of the online token storage unit are included in a shared token limit. The shared token limit may be a token limit of one specific user that is shared between his online token transaction system and his offline token transaction system. So, a user can split his token limit in the online and offline token transaction system according to his needs and preferences. The shared token limit may be a token limit that is shared between different secure token transactions of a specific user. So, a user can split his token limit in different offline (or online) secure token transaction units within the offline (or online) token transaction system according to his needs and preferences.

In a preferred embodiment of the secure token transaction unit, the offline token limit, in particular the offline token monetary value limit, of the offline token storage unit and the online token limit, in particular the online token monetary value limit, of the online token storage unit are identical or are different to each other.

In another aspect of the invention there is provided a method in a secure token transaction unit. The method in a secure token transaction unit comprises receiving by an offline token receiving unit at least one offline token of an electronic token transaction system from at least one other secure token transaction unit of the electronic token transaction system, storing the received at least one offline token of the electronic token transaction system by an offline token storage unit, and, in a collector mode of the secure token transaction unit, restricting the spendability of the at least one offline token.

In a preferred embodiment of the method, the method further comprises redeeming or paying the at least one offline token only to a bank account or online account of the user or transferring the at least one offline token in an online transaction to another secure token transaction unit. Alternatively, the at least one offline token may be redeemed or paid to one or more bank accounts or online accounts of the user.

In a preferred embodiment of the method, the redeeming or paying, in particular the fully redeeming or paying, of the at least one offline token to the bank account or online account of the user is only executed when the at least one offline token, in particular the value of the at least one offline token, exceeds an offline token limit of the offline token receiving unit, or the redeeming or paying, in particular the partial redeeming or paying, of the at least one offline token to a bank account or online account of the user is only executed when the at least one offline token exceeds an offline token limit of the offline token receiving unit and is only executed on the part of the at least one offline token exceeding the offline token limit. In other words, the offline token storage unit may held the received offline token until the next online reconciliation happens.

In a preferred embodiment of the method, the restricting of the spendability of the at least one offline token is provided by marking the at least one offline token as to have a restricted spendability and/or by encrypting the received at least one offline token as to have a restricted spendability.

In a preferred embodiment of the method, the received at least one token from the other secure token transaction unit is marked as to have a restricted spendability and/or is encrypted as to have a restricted spendability.

In a preferred embodiment of the method, the method further comprises, when the secure token transaction unit is in an online token mode, receiving by an online token receiving unit of an at least one secure online token transaction unit the at least one received token as at least one online token, storing by an online token storage unit of the at least one secure online token transaction unit the at least one online token of the electronic token transaction system, and spending the at least one online token in at least one token transaction.

In a preferred embodiment of the method, the method further comprises setting and/or updating by a limit management unit the offline token limit.

In another aspect of the invention there is provided a method for issuing a secure token transaction unit. The method comprises the steps of providing at least one secure token transaction unit including an offline token storage unit having a first offline token limit and an online token storage unit having a first online token limit, wherein the first offline token limit is higher than the first online token limit; receiving or providing by a limit management unit at least one offline token limit update; adding the offline token limit update to the offline token storage unit for updating the first offline token limit to a second offline token limit and for updating the first online token limit to a second online token limit, wherein the second offline token limit is lower than the first offline token limit and the second online token limit is higher than the first online token limit; issuing the secure token transaction unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure token transaction unit.
Fig. 2 shows an exemplary embodiment of a method in a secure token transaction unit.
Fig. 3 shows an exemplary embodiment of a method for issuing a secure token transaction unit.

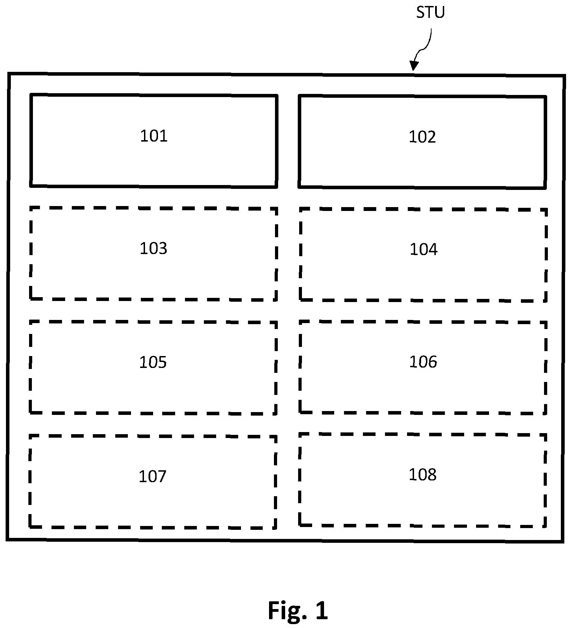

In Fig. 1 there is depicted an exemplary embodiment of a secure token transaction unit. The secure token transaction unit STU comprises an offline token receiving unit 101 and an offline token storage unit 102. The offline token receiving unit 101 is configured for receiving at least one offline token of an electronic token transaction system TS from at least one other secure token transaction unit ASTU of the electronic token transaction system TS. The offline token storage unit 102 is configured for storing the received at least one offline token of the electronic token transaction system TS. In a collector mode of the secure token transaction unit STU, the received offline token is stored such that its spendability is restricted respectively deactivated. The offline token receiving unit 101 and the offline token storage unit 102 are directly or indirectly communicatively coupled to each other.

Optionally, the secure token transaction unit STU further comprises an offline token counter 103. The offline token counter 103 is configured for identifying if the at least one offline token, in particular the monetary value of the at least one offline token, is above, below or equals the offline token limit, in particular the offline token monetary value limit. The offline token counter 103 may be directly or indirectly communicatively couples to the offline token storage unit 102.

Optionally, the secure token transaction unit STU further comprises a marking and/or encryption unit 104. The marking and/or encryption unit 104 is configured for marking the received at least one offline token as to have a restricted spendability and/or for encrypting the received at least one offline token as to have a restricted spendability. The marking and/or encryption unit 104 may be directly or indirectly communicatively couples to the offline token storage unit 102.

Optionally, the secure token transaction unit STU further comprises an online token receiving unit 105. The online token receiving unit 105 is configured for receiving at least one online token of an electronic token transaction system TS of at least one other secure token transaction unit ASTU of the electronic token transaction system TS. The secure token transaction unit STU further comprises an online token storage unit 106. The online token storage 106 is configured for storing the received at least one online token of the electronic token transaction system TS. In a normal mode of the secure token transaction unit STU, the received at least one online token is spendable in at least one further token transaction. The online token receiving unit 105 may be directly or indirectly communicatively coupled to the online token storage unit 106.

Optionally, the secure token transaction unit STU further comprises an online token counter 107, in particular an online token monetary value counter. The online token counter 107 is configured for identifying if the at least one online token, in particular the monetary value of the at least one online token, is above, below or equals the online token limit. The online token counter 107 may be directly or indirectly communicatively couples to the offline token storage unit 106.

Optionally, the secure token transaction unit further comprises a limit management unit 108. The limit management unit 108 is configured for setting, updating and/or defining the online token limit and/or offline token limit, in particular the mandatory value of the online token limit and/or the mandatory value of the offline token limit.

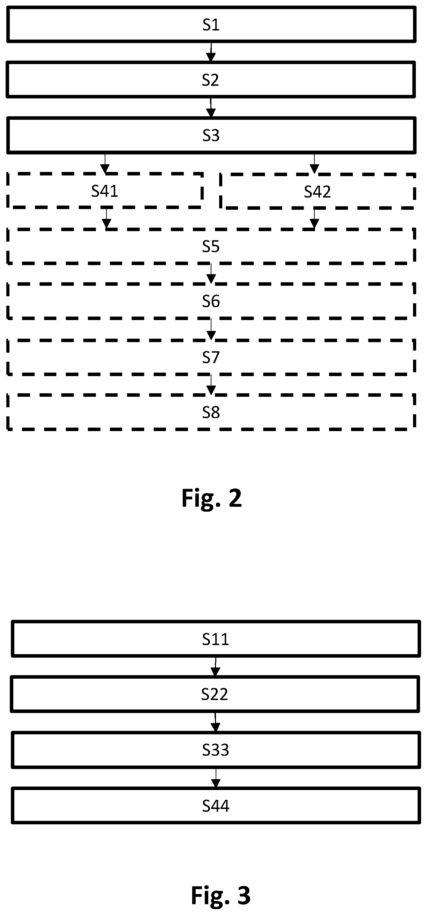

In Fig. 2, there is depicted an exemplary embodiment of a method in a secure token transaction unit STU. In a first step S1 of the method, at least one offline token of an electronic token transaction system TS is received by an offline token receiving unit 101 from at least one other secure token transaction unit ASTU of the electronic token transaction system TS. In a second step S2 of the method, the received at least one offline token of the electronic token transaction system TS is stored by an offline token storage unit 102. In a third step S3 and in a collector mode of the secure token transaction unit STU, the spendability of the at least one offline token is restricted respectively deactivated.

Optionally, in a first fourth step S41, the at least one offline token is redeemed or paid only to a bank account or online account of the user. Alternatively, in a second fourth step S42, the at least one offline token is transferred in an online transaction to another secure token transaction unit ASTU. In this context, the transferred offline token remains his restricted/deactivated spendability. The redeeming or paying S41, in particular the fully redeeming or paying, of the at least one offline token to the bank account or online account of the user is only executed when the at least one offline token, in particular the value of the at least one offline token, exceeds an offline token limit of the offline token receiving unit 101. Alternatively, the redeeming or paying S41, in particular the partial redeeming or paying, of the at least one offline token to a bank account or online account of the user is only executed when the at least one offline token exceeds an offline token limit of the offline token receiving unit 101 and is only executed on the part of the at least one offline token exceeding the offline token limit. The restricting S3 of the spendability of the at least one offline token is provided by marking the at least one offline token as to have a restricted spendability and/or by encrypting the received at least one offline token as to have a restricted spendability. In this context, the restricting S3 step may comprise a sub-step of marking the at least one offline token as to has a restricted spendability. Alternatively or additionally, the restricting S3 step may comprise a sub-step of encrypting the received at least one offline token as to have a restricted spendability.

Optionally, in a fifth step S5, when the secure token transaction unit STU is in an online token mode, at least one online token is received by an online token receiving unit 202 of an at least one secure online token transaction unit OTTU. Additionally, in a sixth step S6, the received at least one online token of the electronic token transaction system TS is stored by an online token storage unit 203 of the at least one secure online token transaction unit OTTU. Additionally, in a sept step S7, the at least one online token is spent in at least one token transaction.

Optionally, in an eight step S8, the offline token limit is set and/or updated by a limit management unit 105.

In Fig. 3, there is depicted a method for issuing a secure token transaction unit STU. In a first step S11 of the method, at least one secure token transaction unit STU is provided including an offline token storage unit 102 having a first offline token limit and an online token storage unit 106 having a first online token limit, wherein the first offline token limit is higher than the first online token limit. In a second step S22, there is received or provided by a limit management unit at least one offline token limit update. In a third step S33, the offline token limit update is added or included to the offline token storage unit 102 for updating the first offline token limit to a second offline token limit and for updating the first online token limit to a second online token limit. The second offline token limit is lower than the first offline token limit and the second online token limit is higher than the first online token limit. In a fourth step S44, the secure token transaction unit STU is issued.

### REFERENCE SIGNS

- STU: secure token transaction unit
- TS: electronic token transaction system
- ASTU: other secure token transaction unit
- 101: offline token receiving unit
- 102: offline token storage unit
- 103: offline token counter
- 104: marking and/or encryption unit
- 105: online token receiving unit
- 106: online token storage unit
- 107: online token counter
- 108: limit management unit
- S1: receiving step
- S2: storing step
- S3: deactivating step
- S41: redeeming step
- S42: redeeming step
- S5: receiving step
- S6: storing step
- S7: spending step
- S8: setting and/or updating step
- S11: providing step
- S22: receiving or providing step
- S33: adding step
- S44: issuing step

## Claims

1. A secure token transaction unit (STU) comprising:
an offline token receiving unit (101) configured for receiving at least one offline token of an electronic token transaction system (TS) from at least one other secure token transaction unit (ASTU) of the electronic token transaction system (TS);
an offline token storage unit (102) configured for storing the received at least one offline token of the electronic token transaction system (TS);
wherein in a collector mode of the secure token transaction unit (STU), the received offline token is stored such that its spendability is restricted.

2. The secure transaction unit (STU) according to claim 1, wherein the electronic token transaction system (TS) is an offline token transaction system of an electronic token transaction system comprising an online digital currency system and the offline token transaction system.

3. The secure token transaction unit (STU) according to any one preceding claims, wherein the secure token transaction unit (STU) is a merchant secure token transaction unit, preferably the merchant secure token transaction unit permanently operating in a collector mode.

4. The secure token transaction unit (STU) according to any one of the preceding claims, wherein the secure token transaction unit (STU) is a user secure token transaction unit, preferably the user secure token transaction unit being operable in a collector mode and in a normal mode.

5. The secure token transaction unit (STU) according to any one of the preceding claims, wherein the offline token storage unit (101) comprises an offline token limit, in particular an offline token monetary value limit, and
wherein the secure token transaction unit (STU) further comprises an offline token counter (103), in particular an offline token monetary value counter, configured for identifying if the at least one offline token, in particular the monetary value of the at least one offline token, is above, below or equals the offline token limit, in particular the offline token monetary value limit, preferably the offline token limit being a normal mode offline token limit or a collector mode offline token limit.

6. The secure token transaction unit (STU) according to claim 5, wherein a collector mode offline token limit is at least 150% of a normal mode offline token limit, preferably at least 300% of the normal mode offline token limit, more preferably at least 1000% of the normal mode offline token limit.

7. The secure token transaction unit (STU) according to any one of the preceding claims, further comprising:
a marking and/or encryption unit (104) configured for marking the received at least one offline token as to have a restricted spendability and/or for encrypting the received at least one offline token as to have a restricted spendability.

8. The secure token transaction unit (STU) according to any one of the preceding claims, further comprising:
an online token receiving unit (105) configured for receiving at least one online token of an electronic token transaction system (TS) of at least one other secure token transaction unit (ASTU) of the electronic token transaction system (TS);
an online token storage unit (106) configured for storing the received at least one online token of the electronic token transaction system (TS),
wherein in a normal mode of the secure token transaction unit (STU), the received at least one online token is spendable in at least one further token transaction.

9. The secure token transaction unit (STU) according to claim 8, wherein the online token storage unit (106) comprises an online limit, in particular an online token monetary value limit, and
wherein the secure token transaction unit (STU) further comprises an online token counter (107), in particular an online token monetary value counter, configured for identifying if the at least one online token, in particular the monetary value of the at least one online token, is above, below or equals the online token limit.

10. The secure token transaction unit (STU) according to one of the claims 5, 6, or 9, further comprising:
a limit management unit (108) configured for setting and/or updating the online token limit and/or offline token limit, in particular the mandatory value of the online token limit and/or the mandatory value of the offline token limit.

11. The secure token transaction unit (STU) according to any one of the claims 5, 6, 9 or 10, wherein the offline token limit, in particular the offline token monetary value limit, of the offline token storage unit (101) and the online token limit, in particular the online token monetary value limit, of the online token storage unit (106) are included in a shared token limit.

12. The secure token transaction unit (STU) according to one of the claims 5, 6, 9, 10 or 11, wherein the offline token limit, in particular the offline token monetary value limit, of the offline token storage unit (101) and the online token limit, in particular the online token monetary value limit, of the online token storage unit (106) are identical or are different to each other.

13. Method in a secure token transaction unit (STU), comprising:
receiving (S1) by an offline token receiving unit (101) at least one offline token of an electronic token transaction system (TS) from at least one other secure token transaction unit (ASTU) of the electronic token transaction system (TS);
storing (S2) the received at least one offline token of the electronic token transaction system (TS) by an offline token storage unit (102); and
in a collector mode of the secure token transaction unit (STU),
restricting (S3) the spendability of the at least one offline token.

14. Method according to claim 13, further comprising:
redeeming (S41) the at least one offline token only to a bank account or online account of the user or
transferring (S42) the at least one offline token in an online transaction to another secure token transaction unit (ASTU).

15. Method according to claim 15, wherein the redeeming (S41), in particular the fully redeeming, of the at least one offline token to the bank account or online account of the user is only executed when the at least one offline token, in particular the value of the at least one offline token, exceeds an offline token limit of the offline token receiving unit (101), or
wherein the redeeming (S41), in particular the partial redeeming, of the at least one offline token to a bank account or online account of the user is only executed when the at least one offline token exceeds an offline token limit of the offline token receiving unit (101) and is only executed on the part of the at least one offline token exceeding the offline token limit.

16. Method according to any one of the claims 14 to 16, wherein the restricting (S3) of the spendability of the at least one offline token is provided by marking the at least one offline token as to have a restricted spendability and/or by encrypting the received at least one offline token as to have a restricted spendability.

17. Method according to any one of the claims 14 to 16, wherein the received at least one token from the other secure token transaction unit (ASTU) is marked as to have a restricted spendability and/or is encrypted as to have a restricted spendability.

18. Method according to any one of the claims 14 to 18, further comprising:
when the secure token transaction unit (STU) is in an online token mode,
receiving (S5) by an online token receiving unit (105) of an at least one
secure online token transaction unit (OTTU) at least one online token;
storing (S6) by an online token storage unit (106) of the at least one secure
online token transaction unit (OTTU) the at least one received online token of the electronic token transaction system (TS), and
spending (S7) the at least one online token in at least one token transaction.

19. Method according to claim 16, further comprising:
setting and/or updating (S8) by a limit management unit (105) the offline token limit.

20. Method for issuing a secure token transaction unit (STU), comprising:
providing (S11) at least one secure token transaction unit (STU) including an offline token storage unit (102) having a first offline token limit and an online token storage unit (106) having a first online token limit, wherein the first offline token limit is higher than the first online token limit;
receiving or providing (S22) by a limit management unit at least one offline token limit update;
adding (S33) the offline token limit update to the offline token storage unit (102) for updating the first offline token limit to a second offline token limit and for updating the first online token limit to a second online token limit,
wherein the second offline token limit is lower than the first offline token limit and the second online token limit is higher than the first online token limit;
issuing (S44) the secure token transaction unit (STU).
